(19) Europäisches Patentamt

European Patent Office

Office européen des brevets

(11) **EP 2 856 722 B1**

(12) **FASCICULE DE BREVET EUROPEEN**

(45) Date de publication et mention de la délivrance du brevet:
**12.02.2020 Bulletin 2020/07**

(21) Numéro de dépôt: **13725977.6**

(22) Date de dépôt: **30.05.2013**

(51) Int Cl.:
*H04L 25/49* *(2006.01)*    *H04L 27/12* *(2006.01)*
*H03M 5/00* *(2006.01)*    *H03M 7/00* *(2006.01)*

(86) Numéro de dépôt international:
**PCT/EP2013/061169**

(87) Numéro de publication internationale:
**WO 2013/178734 (05.12.2013 Gazette 2013/49)**

(54) **CODAGE DE DONNEES POUR MODELAGE DU SPECTRE D'UN SIGNAL GFSK**

DATENCODIERUNG ZUR MODELLIERUNG DES SPEKTRUMS EINES GFSK-SIGNALS

DATA ENCODING FOR MODELING THE SPECTRUM OF A GFSK SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2012 FR 1255030**

(43) Date de publication de la demande:
**08.04.2015 Bulletin 2015/15**

(73) Titulaire: **Safran Electronics & Defense**
**92100 Boulogne-Billancourt (FR)**

(72) Inventeur: **CHIODINI, Alain**
**F-92100 Boulogne-Billancourt (FR)**

(74) Mandataire: **Regimbeau**
**87 rue de Sèze**
**69477 Lyon Cedex 06 (FR)**

(56) Documents cités:
- **FANG XU ET AL: "Coded PPM and Multipulse PPM and Iterative Detection for Free-Space Optical Links", IEEE/OSA JOURNAL OF OPTICAL COMMUNICATIONS AND NETWORKING, IEEE, USA, vol. 1, no. 5, 1 octobre 2009 (2009-10-01), pages 404-415, XP011328007, ISSN: 1943-0620, DOI: 10.1364/JOCN.1.000404**
- **BROOKNER E: "The Performance of FSK Permutation Modulations in Fading Channels and Their Comparison Based on a General Method for the Comparison of M-ary Modulations", IEEE TRANSACTIONS ON COMMUNICATION TECHNOLOGY, IEEE, USA, vol. 12, no. 6, 1 décembre 1969 (1969-12-01), pages 616-640, XP011218332, ISSN: 0018-9332**
- **SLEPIAN D: "PERMUTATION MODULATION", PROCEEDINGS OF THE IEEE, IEEE. NEW YORK, US, 1 mars 1965 (1965-03-01), pages 228-236, XP002044534, ISSN: 0018-9219**
- **OLIVER HENKEL ED - ANONYMOUS: "Arbitrary Rate Permutation Modulation for the Gaussian Channel", INFORMATION THEORY, 2007. ISIT 2007. IEEE INTERNATIONAL SYMPOSIUM ON, IEEE, PISCATAWAY, NJ, USA, 24 juin 2007 (2007-06-24), pages 2321-2325, XP031441058, ISBN: 978-1-4244-1397-3**

## Description

### DOMAINE DE L'INVENTION

Le domaine de l'invention est celui de la modulation de données en vue de leur transmission sur un canal de communication. L'invention concerne plus précisément un procédé visant à réduire la largeur spectrale du signal modulé.

Le document FANG XU ET AL: "Coded PPM and Multipulse PPM and Iterative Détection for Free-Space Optical Links", IEEE/OSA JOURNAL OF OPTICAL COMMUNICATIONS AND NETWORKING, vol. 1, no. 5, 2009, révèle un mappage optimal pour une modulation en position de multiple impulsions (MPPM, en anglais: multipulse pulse-position modulation).

### ARRIERE PLAN DE L'INVENTION

La modulation est un processus permettant de transformer une séquence binaire à transmettre en un signal adapté au canal de transmission. On connaît notamment la modulation par déplacement de fréquence (FSK pour « Frequency Shift Keying ») selon laquelle le signal modulé varie entre des fréquences prédéterminées. La modulation GFSK (« Gaussian FSK ») dérive directement de la modulation FSK : un filtre gaussien est utilisé pour adoucir les transitions entre les déviations fréquentielles négative (bit « 0 ») et positive (bit « 1 ») et réduire ainsi la larguer spectrale du signal modulé (diminution des niveaux maximaux des lobes secondaires par rapport à la modulation FSK). La modulation GFSK est à enveloppe constante et présente donc l'avantage d'être insensible aux distorsions générées par les non-linéarités de l'amplificateur de puissance de la radio. Elle est notamment utilisée dans le cadre des standards DECT (« Digital European Cordless Telephone ») et Bluetooth®.

### EXPOSÉ DE L'INVENTION

L'amélioration de la qualité de transmission de données, évaluée en tant que sensibilité en réception, est un objectif continu dans le domaine d'application de l'invention. Dans ce cadre, on cherche à diminuer la largeur spectrale d'un signal modulé, notamment selon la modulation GFSK.

A cet effet, l'invention propose un procédé de codage de données en vue de leur transmission sur un canal de communication mettant en œuvre une transformation biunivoque d'une suite binaire de P bits représentant un entier x en K suites de N unités d'informations, avec k ≥ 2, où chaque unité peut présenter plusieurs états, N étant supérieur ou égal à P, transformation biunivoque selon laquelle partant de K suites de N unités d'informations, chacune des unités d'informations d'une suite présentant le même état propre à ladite suite, on vient modifier, en fonction de la valeur de l'entité x, M unités d'information parmi les N unités d'information de chacune desdites suites pour qu'elles adoptent un état différent, M étant défini de sorte que le nombre de permutations de M dans N soit au moins égal à $\sqrt[K]{2^P}$.

Certains aspects préférés, mais non limitatifs, de ce procédé sont les suivants :

- K=2 et M est défini de sorte que le nombre de permutations de M dans N soit au moins égal à $\sqrt{2^P}$, et la transformation biunivoque consiste, partant d'une première suite de N bits « 1 » et d'une seconde suite de N bits « 0 », à combiner M bits « 0 » avec (N-M) bits « 1 » dans la première suite et à combiner M bits « 1 » avec (N-M) bits « 0 » dans la seconde suite ;

- Il comprend une décomposition de l'entier x en la somme de $x1^*\sqrt{2^P}+x2$, où x1 correspond à la partie entière de la division $x/\sqrt{2^P}$ et x2 correspond au reste de ladite division, et dans lequel

  - lorsque l'entier x est supérieur à $\sqrt{2^P}$, la partie entière x1 est représentée par la première suite de N bits et le reste x2 est représenté par la seconde suite de N bits,

  - lorsque l'entier x est inférieur à $\sqrt{2^P}$, le reste x2 est représenté à la fois par la première et la seconde suites ;

- les unités d'informations peuvent prendre 4 états différents ;
- les données codées sont modulées, en particulier selon une modulation GFSK ;

L'invention s'étend également au procédé de décodage mettant en œuvre la transformation inverse de la transformation biunivoque de codage. Elle couvre également un codeur et un décodeur.

### PRESENTATION DES FIGURES

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :

- La figure 1 représente la densité de puissance spectrale en fonction de la fréquence dans le cas d'un signal idéal dont le spectre serait réduit à deux uniques déviations fréquentielles associées aux bits « 0 » et « 1 » ;
- La figure 2 la concaténation de deux suites de N bits résultant du codage selon l'invention l'une étant obtenue en combinant M bits « 0 » avec N-M bits « 1 » et l'autre étant obtenue en combinant M bits « 1 » avec N-M bits « 1 » ;

- La figure 3 représente la densité de puissance spectrale en fonction de la fréquence pour un signal régulier et pour un signal conforme à l'invention.

## DESCRIPTION DETAILLEE DE L'INVENTION

Comme discuté précédemment, on peut gagner en sensibilité de réception en diminuant la largeur spectrale d'un signal modulé en vue de sa transmission sur un canal de communication.

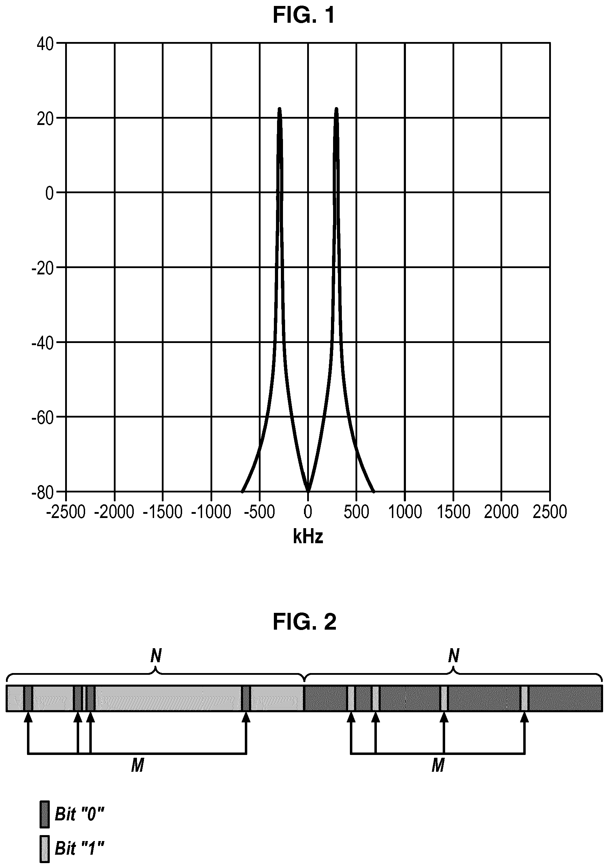

Prenant l'exemple d'une modulation GFSK, l'idéal serait de réduire le spectre aux deux seules déviations associées aux bits « 0 » et « 1 ». Dans ce cas, le spectre serait seulement constitué de deux exponentielles complexes pures : l'une à -f0, l'autre à + fo comme illustré sur la figure 1 représentant la densité de puissance spectrale en fonction de la fréquence et où fo=288 kHz. Pour arriver à ce résultat, il faudrait transmettre une série de « 1 » suivie d'une série de « 0 » (ou vice-versa). Il en résulterait malheureusement un écroulement de la capacité de transmission puisque finalement l'équivalent de seulement deux bits d'informations au lieu de 320 dans un exemple d'application de l'invention basé sur le standard DECT lequel exploite typiquement un codage de la voix à 32 kbit/s selon le protocole G.726. Comme on le verra par la suite, l'invention repose sur ce principe de transmission de série de « 0 » ou de « 1 » pour réduire la largeur spectrale d'un signal modulé.

Une application que l'on pourra faire de l'invention concerne les communications mettant en œuvre une compression audio selon le codec G.726 par exemple, notamment dans le cadre de communications reposant sur la norme de téléphonie sans fil DECT (en anglais, « *Digital European Cordless Telephone* »). Dans un exemple d'application, l'invention propose de configurer le codec à un débit binaire inférieur au débit maximal (par exemple à 16 kbit/s voire 8 kbit/s dans des applications où il est normalement utilisé à 32 kbit/s) et d'exploiter l'espace binaire (16 kbits/s) ainsi libéré.

L'invention concerne selon un premier aspect le codage d'une suite binaire de P bits représentant un entier x en vue de sa transmission sur un canal de communication. Reprenant l'exemple du DECT, les suites binaires produites par le vocodeur durant une période élémentaire T donnée (typiquement 10 ou 20 ms) constituent un ensemble E comprenant $2^P$ éléments (où P désigne la longueur du segment binaire généré, exprimée en bits, et dont la valeur est celle d'un entier dénommé x par la suite). A titre d'exemple, si le vocodeur est configuré pour fonctionner à 16 kbit/s, alors P=160 bits si T=10 ms. Dans ce cas, le cardinal de E est égal à $2^{160}=1,4615.10^{48}$.

L'invention propose de réaliser une transformation biunivoque d'une telle suite binaire de P bits représentant un entier x en K suites de N unités d'informations où chaque unité peut présenter plusieurs états et où N est supérieur ou égal à P. Une unité d'informations est typiquement un bit pouvant prendre deux états, respectivement « 0 » ou « 1 ». L'invention s'étend également à d'autres types d'unités d'informations, comme par exemple des unités d'informations pouvant prendre quatre états différents comme cela sera détaillé par la suite.

Selon l'invention, partant d'une suite de N unités d'informations présentant le même état, on vient modifier, en fonction de la valeur de l'entier x, M unités d'information parmi les N unités d'information pour qu'elles adoptent un état différent. M est défini de sorte que le nombre de permutations de M dans N soit au moins égal à $\sqrt[K]{2^P}$ et selon la valeur de l'entité x ce sont M différentes unités parmi les N qui sont modifiés pour que l'entier x et les K suites de N unités résultant de la transformation soient en relation biunivoque.

Reprenant l'exemple précédent, on peut tirer parti de l'espace binaire rendu disponible par l'utilisation du vocodeur fonctionnant à débit réduit de 16 kbit/s, voire de 8 kbit/s, au lieu du débit habituel de 32 kbit/s. On a ainsi une charge utile de 320 bits pour transmettre une séquence de P=160 bits, voire de P=80 bits.

Selon une variante de réalisation, on peut prendre K=2, c'est à dire que la suite binaire de P bits par exemple pourra être transformée en un segment binaire (de longueur 320 bits par exemple) obtenus en concaténant deux suites binaires (de longueur N=160 bits par exemple): la première suite étant obtenue en combinant M bits « 0 » avec N-M bits « 1 » tandis que la seconde suite est obtenue en combinant M bits « 1 » avec N-M bits « 0 ». M est ici choisi de manière à ce que le nombre de permutations de M dans N soit au moins égal à $\sqrt{2^P}$. M doit ainsi être supérieur ou égal à 8 si le vocodeur a un débit de 8 kbit/s, supérieur ou égal à 19 si le vocodeur a un débit de 16kbit/s.

On vient pour ce faire décomposer l'entier x en la somme de $x1*\sqrt{2^P}+x2$, où x1 correspond à la partie entière de la division $x/\sqrt{2^P}$ et x2 correspond au reste de ladite division. Lorsque l'entier x est supérieur à $\sqrt{2^P}$, la partie entière x1 est représentée par la première suite de N bits et le reste x2 est représenté par la seconde suite de N bits. Dans le cas contraire, lorsque l'entier x est inférieur à $\sqrt{2^P}$ (on a donc x1 nul), le reste x2 peut être représenté à la fois par la première et la seconde suites, ce qui permet d'équilibrer le spectre autour des deux fréquences -fo et +fo.

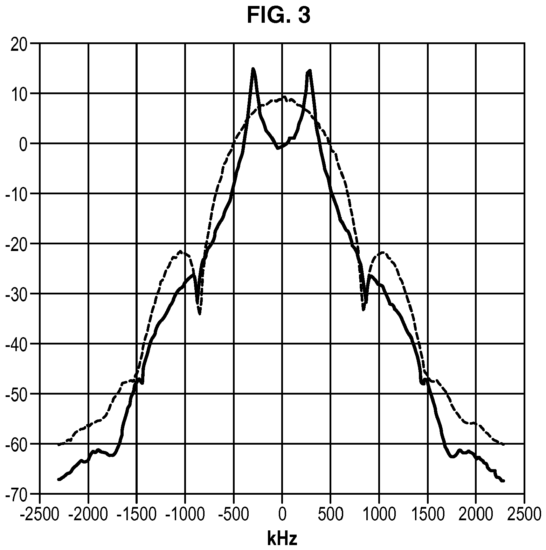

La figure 2 représente les deux suites de N bits concaténées comme explicité ci-dessus. On constate d'une part que le segment binaire généré par le codage selon l'invention comporte une majorité de « 1 » suivi d'une majorité de « 0 », et d'autre part que le nombre de transitions binaires est faible (M étant faible par rapport à N). Il en résulte que le spectre obtenu va se rapprocher du spectre idéal évoqué ci-dessus. La figure 3 compare la densité de puissance spectrale d'un signal modulé GFSK « régulier » (en traits pointillés) avec celle d'un signal modulé GFSK ayant préalablement était soumis au codage selon l'invention (en traits pleins). Il ressort de cette figure 3 que l'invention permet de réduire la largeur spectrale du signal modulé, et de réduire les niveaux maximaux des lobes secondaires (ce qui permet par conséquent de diminuer les interférences sur les canaux adjacents). Cet accroissement de l'efficacité spectrale est en outre obtenu de manière relativement simple.

Selon un autre variante, on peut prendre K=1, de sorte que la suite binaire de P bits (160 bits par exemple) est transformée en une suite binaire de N bits (320 bits par exemple) formée sur la base d'une suite de N bits « 1 », respectivement « 0 », en venant combiner M bits « 0 », respectivement « 1 », parmi (N-M) bits « 1 », respectivement « 0 ». M est ici choisi de manière à ce que le nombre de permutations de M dans N soit au moins égal à $2^P$.

On connaît également des modulations de type FSK dites quaternaires en ce que par opposition à des transformations binaires, les données modulées ne sont pas représentés par des bits mais par des unités d'informations présentant quatre états (par exemple état 00 = « bleu », 01 = « vert », 11 = «jaune» ou 10 = « rouge »). C'est le cas notamment de la modulation QGFSK. Dans un tel cas de figure, on peut venir transformer un entier x représenté par une suite binaire de P bits en K=4 suites de N unités d'information à 4 états. Partant d'une suite de N unités d'information présentant toutes le même état, on vient modifier M unités d'information pour qu'elles adoptent un état différent. Reprenant l'exemple d'états sous la forme de couleur, partant d'une suite de N états bleu, on peut venir la modifier pour qu'elle soit formée de M états jaune et de (N-M) états bleu. On opère la substitution inverse jaune-bleu jaune en partant de la suite exclusivement jaune, et on opère de manière similaire entre états vert et rouge. Ici, M est défini de sorte que le nombre de permutations de M dans N soit au moins égal à $\sqrt[4]{2^P}$.

L'entier x peut se décomposer de la manière suivante : $x = y1 * \sqrt[4]{2^P} + y2.$ Le reste y2 du ratio $x/\sqrt[4]{2^P}$ peut être représenté par une première suite de N unités d'information, où M unités ont été modifiées pour adopter un état différent (par exemple jaune) d'un premier état (par exemple bleu). La partie entière y1 du ratio $x/\sqrt[4]{2^P}$ peut se décomposer de la manière suivante : $y1 = y3 * \sqrt[4]{2^P} + y4,$ et le reste y4 peut être représenté par une seconde suite de N unités d'information, où M unités ont été modifiées pour adopter un état différent (rouge) d'un second état (vert). La partie entière y3 du ratio $y1/\sqrt[4]{2^P}$ peut se décomposer de la manière suivante : $y3 = y5 * \sqrt[4]{2^P} + y6.$ Le reste y6 peut être représenté par une troisième suite de N unités d'information, où M unités ont été modifiées pour adopter un état différent (bleu) d'un troisième état (jaune), et la partie entière y5 peut être représentée par une quatrième suite de N unités d'informations, où M unités ont été modifiées pour adopter un état différent (vert) d'un quatrième état (rouge).

Revenant au cas binaire, on détaille ci-après un exemple de réalisation de transformation directe permettant d'associer de manière biunivoque à un entier x donné un mot binaire y formé d'une combinaison de M bits « 1 » (respectivement « 0 ») avec N-M bits « 0 » (resp. « 1 »), avec M défini tel que présenté précédemment. Selon cette réalisation, plus la valeur de x augmente plus les M bits s'écartent de la droite: l'entier x=0 est ainsi représenté sous la forme de N-M « 0 » suivis de M « 1 » tandis que l'entier correspondant à la partie entière du ratio $x/\sqrt{2^P}$ est représenté sous la forme de M « 1 » suivis de N-M « 0 ».

Initialisations : m=1, j=0, y = [0 0... 0] (resp. y = [1 1 ... 1])
Boucle :

Pour n allant de 1 à N :

   Si (M - m) $\geq$ 0 alors

      Calculer S = $C_{N-n}^{M-m}$

   Sinon

      S = 1

Fin

Si x < S alors

    y(n)=1 (resp. y(n)=0)

    m := m+1

    j := j+1

    Si j= M alors

        Quitter la boucle

    Fin

Sinon

x :=x-S

Fin

  Fin

Dans le cadre de l'invention, l'entier x ainsi codé est soumis à un traitement de modulation, typiquement une modulation GFSK, avant d'être transmis sur le canal de transmission. Côté récepteur, les données reçues sont démodulées, puis soumises à la transformation inverse (décodage) à la transformation directe biunivoque (codage) de l'entier x.

La transformation inverse à la transformation présentée ci-dessus à titre d'exemple permet d'associer un entier x à un mot binaire y donné formé d'une combinaison de M bits « 1 ») (resp. « 0 ») avec N-M bits « 0 » (resp. 1 »). Elle se représente sous la forme algorithmique suivante.

Initialisations : m=1, j=0, x=0
Boucle :

Pour n allant de 1 à N :

  Si (M - m) ≥ 0 alors

    Calculer $S = C_{N-n}^{M-m}$

Sinon

  S = 0

Fin

Si y(n)=0 (resp. y(n) = 1) alors

  x :=x+S

Sinon

  m := m+1

  j := j+1

  Si j= M alors

    Quitter la boucle

  Fin

  Fin

Fin

L'invention n'est bien entendu pas limitée au procédé de codage, mais s'étend également à un codeur configuré pour mettre en œuvre un tel codage. Elle vise bien entendu également le procédé de décodage mettant en œuvre la transformation inverse de la transformation biunivoque de codage, ainsi qu'à un décodeur configuré pour réaliser un tel décodage.

## Revendications

1. Procédé de codage de données en vue de leur transmission sur un canal de communication mettant en œuvre une transformation biunivoque d'une suite binaire de P bits représentant un entier x en K suites de N unités d'informations, avec k ≥ 2, où chaque unité peut présenter plusieurs états, N étant supérieur ou égal à P,
transformation biunivoque selon laquelle partant de K suites de N unités d'informations, chacune des unités d'informations d'une suite présentant le même état propre à ladite suite, on vient modifier, en fonction de la valeur de l'entité x, M unités d'information parmi les N unités d'information de chacune desdites suites pour qu'elles adoptent un état différent, M étant défini de sorte que le nombre de permutations de M dans N soit au moins égal à $\sqrt[K]{2^P}$.

2. Procédé selon la revendication 1, dans lequel les unités d'informations sont des bits pouvant prendre l'état « 0 » ou l'état « 1 ».

3. Procédé selon la revendication 2, dans lequel K=2 et M est défini de sorte que le nombre de permutations de M dans N soit au moins égal à $\sqrt{2^P}$, et la transformation biunivoque consiste, partant d'une première suite de N bits « 1 » et d'une seconde suite de N bits « 0 », à combiner M bits « 0 » avec (N-M) bits « 1 » dans la première suite et à combiner M bits « 1 » avec (N-M) bits « 0 » dans la seconde suite.

4. Procédé selon la revendication 3 comprenant une décomposition de l'entier x en la somme de $x1*\sqrt{2^P}+x2$, où x1 correspond à la partie entière de la division $x/\sqrt{2^P}$ et x2 correspond au reste de ladite division, et dans lequel

   - lorsque l'entier x est supérieur à $\sqrt{2^P}$, la partie entière x1 est représentée par la première suite de N bits et le reste x2 est représenté par la seconde suite de N bits,

   - lorsque l'entier x est inférieur à $\sqrt{2^P}$, le reste x2 est représenté à la fois par la première et la seconde suites.

5. Procédé selon la revendication 1, dans lequel les unités d'informations peuvent prendre 4 états différents.

6. Procédé selon la revendication 5, comprenant

   - une décomposition de l'entier x en la somme de $y1*\sqrt[4]{2^P}+y2$, où y1 correspond à la partie entière de la division $x/\sqrt[4]{2^P}$ et y2 correspond au reste de ladite division, et dans lequel le reste y2 est représenté par la première suite de N unités d'informations, où M unités ont été modifiées pour adopter un état différent, et

   - une décomposition de la partie entière y1 en la somme de $y3*\sqrt[4]{2^P}+y4$, où y3 correspond à la partie entière de la division $x/\sqrt[4]{2^P}$ et y4 correspond au reste de ladite division, et dans lequel le reste y4 est représenté par la deuxième suite de N unités d'informations, où M unités ont été modifiées pour adopter un état différent,

   - une décomposition de la partie entière y3 en la somme de $y5*\sqrt[4]{2^P}+y6$, où y5 correspond à la partie entière de la division $x/\sqrt[4]{2^P}$ et y6 correspond au reste de ladite division, et dans lequel le reste y6 est représenté par la troisième suite de N unités d'informations, où M unités ont été modifiées pour adopter un état différent, et la partie entière y5 est représenté par la quatrième suite de N unités d'informations, où M unités ont été modifiées pour adopter un état différent.

7. Procédé selon l'une des revendications précédentes, dans lequel les données codées sont modulées, en particulier selon une modulation GFSK.

8. Codeur de données, **caractérisé en ce qu'**il est configuré pour mettre en œuvre le procédé selon l'une des revendications 1 à 7.

9. Procédé de décodage de données codées mettant en œuvre la transformation inverse de la transformation biunivoque du procédé selon l'une des revendications 1 à 7.

10. Décodeur de données, **caractérisé en ce qu'**il est configuré pour mettre en œuvre le procédé selon la revendication 9.

**Patentansprüche**

1. Verfahren zum Codieren von Daten im Hinblick auf deren Übertragung auf einem Kommunikationskanal, das eine eineindeutige Transformation einer binären Folge von P Bits, die eine ganze Zahl x darstellt, in K Folgen von N Informationseinheiten umsetzt, wobei k ≥ 2, wobei jede Einheit mehrere Zustände aufweisen kann, wobei N größer oder gleich P ist,
eineindeutige Transformation, der gemäß ausgehend von K Folgen von N Informationseinheiten, wobei jede der Informationseinheiten einer Folge denselben Zustand aufweist, der der Folge eigen ist, M Informationseinheiten aus den N Informationseinheiten jeder der Folgen in Abhängigkeit vom Wert der Einheit x modifiziert werden, damit sie einen unterschiedlichen Zustand annehmen, wobei M derart definiert ist, dass die Anzahl von Permutationen von M in N mindestens gleich $\sqrt[K]{2^P}$ ist.

2. Verfahren nach Anspruch 1, wobei die Informationseinheiten Bits sind, die den Zustand "0" oder den Zustand "1" annehmen können.

3. Verfahren nach Anspruch 2, wobei K=2 und M derart definiert ist, dass die Anzahl von Permutationen von M in N mindestens gleich $\sqrt{2^P}$ ist, und die eineindeutige Transformation darin besteht, ausgehend von einer ersten Folge von N Bits "1" und einer zweiten Folge von N Bits "0" in der ersten Folge M Bits "0" mit (N-M) Bits "1" zu kombinieren, und in der zweiten Folge M Bits "1" mit (N-M) Bits "0" zu kombinieren.

4. Verfahren nach Anspruch 3, das eine Zerlegung der ganzen Zahl x in die Summe von $x1 * \sqrt{2^P} + x2$ umfasst, wobei x1 dem ganzzahligen Teil der Division $x / \sqrt{2^P}$ entspricht, und x2 dem Rest der Division entspricht, und wobei

   - wenn die ganze Zahl x größer ist als $\sqrt{2^P}$, der ganzzahlige Teil x1 von der ersten Folge von N Bits dargestellt wird, und der Rest x2 von der zweiten Folge von N Bits dargestellt wird,
   - wenn die ganze Zahl x kleiner ist als $\sqrt{2^P}$, der Rest x2 gleichzeitig von der ersten und der zweiten Folge dargestellt wird.

5. Verfahren nach Anspruch 1, wobei die Informationseinheiten 4 unterschiedliche Zustände annehmen können.

6. Verfahren nach Anspruch 5, umfassend

   - eine Zerlegung der ganzen Zahl x in die Summe von $y1 * \sqrt[4]{2^P} + y2$, wobei y1 dem ganzzahligen Teil der Division $x / \sqrt[4]{2^P}$ entspricht, und y2 dem Rest der Division entspricht, und wobei der Rest y2 von der ersten Folge von N Informationseinheiten dargestellt wird, wobei M Einheiten modifiziert wurden, um einen unterschiedlichen Zustand anzunehmen,
   - eine Zerlegung des ganzzahligen Teils y1 in die Summe von $y3 * \sqrt[4]{2^P} + y4$, wobei y3 dem ganzzahligen Teil der Division $x / \sqrt[4]{2^P}$ entspricht, und y4 dem Rest der Division entspricht, und wobei der Rest y4 von der zweiten Folge von N Informationseinheiten dargestellt wird, wobei M Einheiten modifiziert wurden, um einen unterschiedlichen Zustand anzunehmen, und
   - eine Zerlegung des ganzzahligen Teils y3 in die Summe von $y5 * \sqrt[4]{2^P} + y6$, wobei y5 dem ganzzahligen Teil der Division $x / \sqrt[4]{2^P}$ entspricht, und y6 dem Rest der Division entspricht, und wobei der Rest y6 von der dritten Folge von N Informationseinheiten dargestellt wird, wobei M Einheiten modifiziert wurden, um einen unterschiedlichen Zustand anzunehmen, und der ganzzahlige Teil y5 von der vierten Folge von N Informationseinheiten dargestellt wird, wobei M Einheiten modifiziert wurden, um einen unterschiedlichen Zustand anzunehmen.

7. Verfahren nach einem der vorstehenden Ansprüche, wobei die codierten Daten moduliert werden, insbesondere gemäß einer GFSK-Modulation.

8. Datencodierer, **dadurch gekennzeichnet, dass** er dafür konfiguriert ist, das Verfahren nach einem der Ansprüche 1 bis 7 umzusetzen.

9. Verfahren zum Decodieren von codierten Daten, das die inverse Transformation der eineindeutigen Transformation des Verfahrens nach einem der Ansprüche 1 bis 7 umsetzt.

10. Datendecodierer, **dadurch gekennzeichnet, dass** er dafür konfiguriert ist, das Verfahren nach Anspruch 9 umzusetzen.

**Claims**

1. A method to encode data for transmission thereof over a communication channel, using bijective conversion of a binary sequence of P bits representing an integer x into K sequences of N information units, with k ≥ 2, wherein each unit may have several states, N being greater than or equal to P, a bijective conversion whereby, starting from K sequences of N information units, each of the information units of a sequence having the same state particular to said sequence, M information units among the N information units of each of said sequences are modified as a function of the value of the integer x so that they adopt a different state, M being defined so that the number of permutations of M in N is at least equal to $\sqrt[K]{2^P}$.

2. The method according to claim 1, wherein the information units are bits able to adopt state "0" or state "1".

3. The method according to claim 2, wherein K=2 and M is defined so that the number of permutations of M in N is at least equal to $\sqrt{2^P}$ and the bijective conversion, starting from a first sequence of N "1" bits and a second sequence of N "0" bits, consists of combining M "0" bits with (N-M) "1" bits in the first sequence and of combining M "1" bits with (N-M) "0" bits in the second sequence.

**4.** The method according to claim 3 comprising a decomposition of the integer x into the sum of $x1*\sqrt{2^P}+x2$, where x1 corresponds to the integer portion of the division $x/\sqrt{2^P}$ and x2 corresponds to the remainder of said division, and wherein:

- when the integer x is greater than $\sqrt{2^P}$, the integer portion x1 is represented by the first sequence of N bits and the remainder x2 is represented by the second sequence of N bits,

- when the integer x is lower than $\sqrt{2^P}$, the remainder x2 is represented both by the first and the second sequences.

**5.** The method according to claim 1, wherein the information units can adopt 4 different states.

**6.** The method according to claim 5, comprising:

- decomposition of the integer x into the sum of $y1*\sqrt[4]{2^P}+y2$, where y1 corresponds to the integer portion of the division $x/\sqrt[4]{2^P}$ and y2 corresponds to the remainder of said division, and wherein the remainder y2 is represented by the first sequence of N information units in which M units have been modified to adopt a different state;

- decomposition of the integer portion y1 into the sum of $y3*\sqrt[4]{2^P}+y4$, where y3 corresponds to the integer portion of the division $x/\sqrt[4]{2^P}$ and y4 corresponds to the remainder of said division, and wherein the remainder y4 is represented by the second sequence of N information units in which M units have been modified to adopt a different state; and

- decomposition of the integer portion y3 into the sum of $y5*\sqrt[4]{2^P}+y6$, where y5 corresponds to the integer portion of the division $x/\sqrt[4]{2^P}$ and y6 corresponds to the remainder of said division, and wherein the remainder y6 is represented by the third sequence of N information units in which M units have been modified to adopt a different state, and the integer portion y5 is represented by the fourth sequence of N information units in which M units have been modified to adopt a different state.

**7.** The method according to one of the preceding claims, wherein the encoded data are modulated, in particular by GFSK modulation.

**8.** A data encoder, **characterized in that** it is configured to apply the method according to one of claims 1 to 7.

**9.** A method to decode encoded data applying inverse conversion of the bijective conversion of the method according to one of claims 1 to 7.

**10.** A data decoder, **characterized in that** it is configured apply the method according to claim 9.

## FIG. 1

## FIG. 2

Bit "0"
Bit "1"

## FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FANG XU et al.** Coded PPM and Multipulse PPM and Iterative Détection for Free-Space Optical Links. *IEEE/OSA JOURNAL OF OPTICAL COMMUNICATIONS AND NETWORKING,* 2009, vol. 1 (5